Europäisches Patentamt

European Patent Office

Office européen des brevets

(11) Veröffentlichungsnummer: **0 054 280**
**B1**

(12) # EUROPÄISCHE PATENTSCHRIFT

(45) Veröffentlichungstag der Patentschrift:
27.02.85

(51) Int. Cl.⁴: **F 16 H 1/28**

(21) Anmeldenummer: 81110374.6

(22) Anmeldetag: 11.12.81

(54) **Umlaufstirnzahnradgetriebe.**

(30) Priorität: 12.12.80 DE 3046934

(43) Veröffentlichungstag der Anmeldung:
23.06.82 Patentblatt 82/25

(45) Bekanntmachung des Hinweises auf die Patenterteilung:
27.02.85 Patentblatt 85/9

(84) Benannte Vertragsstaaten:
AT CH DE FR GB IT LI SE

(56) Entgegenhaltungen:
EP - A - 0 003 894
CH - A - 519 666
DD - A - 110 097
DE - A - 1 550 853
DE - A - 2 648 154
DE - B - 1 173 305
DE - B - 1 450 896
DE - B - 1 500 451
DE - B - 2 620 570
US - A - 3 776 067

(73) Patentinhaber: Fürstlich Hohenzollernsche
Hüttenverwaltung Laucherthal, Laucherthal,
D-7480 Sigmaringen (DE)

(72) Erfinder: Eisenmann, Siegfried, Dipl. Ing.,
Conchesstrasse 25, D-7960 Aulendorf (DE)
Erfinder: Felder, Winfried, Ing., Conchesstrasse 13,
D-7960 Aulendorf (DE)
Erfinder: Grieble, Manfred, Zehntscheuerstrasse 12,
D-7952 Bad Buchau (DE)
Erfinder: Müller, Erhard, Zur Lichtenhardt 3,
D-5910 Kreuztal (DE)

(74) Vertreter: Berg, Wilhelm, Dr. et al, Patentanwälte Dr.
Berg Dipl.-Ing. Stapf Dipl.-Ing. Schwabe Dr. Dr. Sandmair
Postfach 86 02 45 Stuntzstrasse 16,
D-8000 München 86 (DE)

ACTORUM AG

## Beschreibung

Die Erfindung betrifft ein Umlaufstirnzahnradgetriebe gemäss dem Oberbegriff des Anspruchs 1, insbesondere ein solches, welches für am Durchmesser des Getriebes gemessen hohe Betriebsdrehmomente bei grossem Übersetzungsverhältnis bestimmt ist.

Derartige Getriebe können z.B. in Seilwinden, Krandrehwerken, Achsantrieben für Fahrzeuge, Vorschubgetriebe für Werkzeugmaschinen, in der Fördertechnik, in der Walzwerkstechnik und für viele andere Zwecke eingesetzt werden.

Bei solchen Planetengetrieben, die für hohe Betriebsdrehmomente bestimmt sind, liegt ein wesentliches Problem darin, dass das Sonnenrad und die die Planetenräder tragenden Zapfen oder Achsen verhältnismässig stark verformt werden. Das hat zur Folge, dass die Planetenräder nicht mehr auf der vollen Breite tragen. Um die damit verbundenen Nachteile, wie die Gefahr von Zahneckbrüchen, Ermüdung oder Bruch der Zahnflanken u. dgl. zu verringern, kann man jedes Planetenrad durch eine Mehrzahl gleicher, axial unmittelbar nebeneinander gelagerter, entsprechend schmaler Planetenräder ersetzen. Dadurch wird zwar der tragende Anteil der Zahnflankenfläche erhöht. Ein volles Tragen wird aber immer noch nicht bewirkt, da je nach der Steifigkeit des Sonnenrades bzw. der Planetenradachsen die auf einer gemeinsamen Planetenradachse liegenden Planetenräder erheblich unterschiedlich belastet sein können.

Die dargelegte Problematik wird besonders gravierend, wenn, wie dies bei Getrieben für hohe Betriebsdrehmomente normalerweise der Fall ist, das Sonnenrad eine grosse axiale Erstreckung hat, die beispielsweise das Vierfache des Sonnenradteilkreisdurchmessers betragen kann.

Um eine gleichmässige Belastung der Planetenräder und auch des Sonnenrades und des Hohlrades zu erreichen, schlägt daher die DE-A Nr. 1 550 853 vor, entsprechend der Anzahl von auf jeder Planetenradachse sitzenden Planetenrädern ebenfalls das Hohlrad und das Sonnenrad in eine Mehrzahl axial nebeneinander liegender Räder zu unterteilen. Die so entstandenen Hohlradringe sind drehbar gelagert und jeweils derart nachgiebig abgestützt, dass ein im Verhältnis zu den anderen Hohlradringen stärkeres Nachgeben eines Hohlradringes aufgrund stärkerer Lastaufnahme desselben eine Verdrehung der anderen Hohlradringe im entgegengesetzten Sinne bewirkt, so dass letztere mehr Last aufnehmen müssen, was wiederum eine Vergleichsmässigung der Belastung zur Folge hat. Um ein einwandfreies Tragen der Planetenräder auf den einzelnen Sonnenradringen zu gewährleisten, sind diese in Drehrichtung durch aussen mit Keilprofil in die Bohrungen der einzelnen Sonnenradringe eingreifende Keilprofilringe miteinander verbunden, welche eine nachgiebige Kraftübertragung vom der Antriebsseite zunächst liegenden Sonnenradring zum nächstfolgenden und sofort bewirken sollen.

Diese Konstruktion bewirkt zwar einen recht guten Ausgleich der Belastung der einzelnen, axial nebeneinander liegenden Zahnräder bzw. Zahnradringe. Sie ist jedoch wegen des erforderlichen Aufwandes für die nachgiebig ausgleichende Drehkraftaufnahme der nebeneinander liegenden Hohlradringe baulich ausserordentlich aufwendig. Hinzu kommt, dass die nachgiebige Lagerung der Hohlradringe naturgemäss die radiale Erstreckung des Getriebes zumindest auf einem Teil seines Umfanges erheblich vergrössert, da die entsprechenden, die Umfangskraft aufnehmenden und einander wechselseitig mitteilenden Elemente radial ausserhalb der Hohlradringe angebracht sein müssen. Das ist höchst unerwünscht, da ja erst ein geringer Umfang das Getriebe zu einem Hochleistungsgetriebe macht.

Auch ist die durch die Keilnutenringe bewirkte Drehmomentübertragung von einem Sonnenradring zum nächstfolgenden nicht für die Übertragung sehr hoher Drehmomente geeignet, da jeder der Keilnutprofilringe sich in jeden der beiden, durch ihn verbundenen Sonnenradringe nur maximal bis zur Hälfte der axialen Erstreckung der letzteren hinein erstrecken kann. Dementsprechend muss das gesamte, in das Getriebe einzuleitende Drehmoment in den ersten der Sonnenradringe mittels eines Keilnutprofils eingebracht werden, das nur die halbe Axialerstreckung des ersten Sonnenradrings aufweist. Da eine Kette nur so stark wie ihr schwächstes Glied ist, ist dieses Getriebe nicht für hohe Drehmomente bei geringem Getriebedurchmesser geeignet.

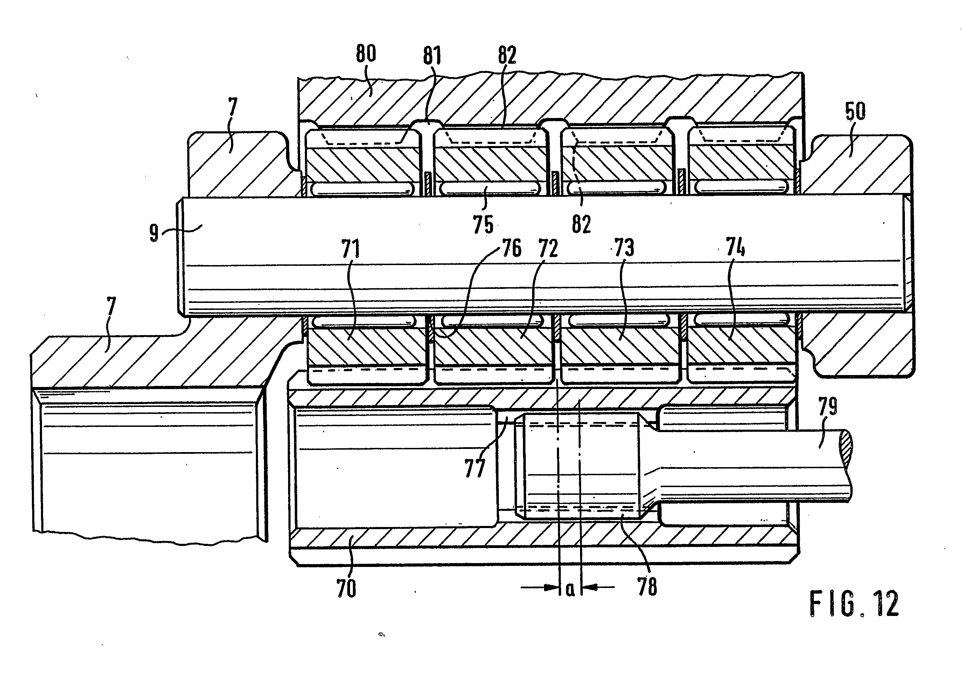

Die DE-A Nr. 1 550 853 schlägt zwar als Alternative zu der beschriebenen Konstruktion eine Sonnenradausbildung vor, bei welcher letzteres als Hohlrad ausgebildet ist und von einer es durchsetzenden Antriebswelle über eine Keilnutverzahnung angetrieben ist, ähnlich wie dies bei Fig. 12 der vorliegenden Patentschrift der Fall ist. Zur Vergleichsmässigung sollen bei dieser Konstruktion entsprechend der Unterteilung der Planetenräder in mehrere, in Axialrichtung nebeneinander liegende Räder in den Zahnkranz des Sonnenrades entsprechende Nuten eingestochen sein. Die DE-A Nr. 1 550 853 geht dabei davon aus, dass das Sonnenrad bei dieser Konstruktion notwendig drehsteif sein müsse. Im übrigen gilt auch für diese Konstruktion, dass sie baulich sehr aufwendig ist und zu einem grossen Getriebedurchmesser führt.

Ferner ist der Vollständigkeit halber darauf hinzuweisen, dass eine gegen Torsion nachgiebige Ausbildung von Sonnenrädern dem Grunde nach bekannt ist, beispielsweise aus der DE-B Nr. 1 450 896. Bei dieser Konstruktion soll der Einfluss von Fertigungsungenauigkeit u. dgl. auf eine ungleichmässige Belastung des Sonnenrades dadurch ausgeglichen werden, dass letzteres aus zwei torsionselastisch mit der Antriebswelle verbundenen, in Axialrichtung nebeneinander liegenden Teilen ausgebildet wird.

Die Erfindung löst die Aufgabe, das Planetengetriebe nach dem Oberbegriff des Anspruchs 1 dahingehend weiterzubilden, dass eine wenigstens angenähert gleichmässige Belastung aller Planetenräder ohne wesentlich zusätzlichen baulichen

Aufwand und ohne Vergrösserung des Maximaldurchmessers des Getriebes erreicht wird.

Das wird gemäss der Erfindung durch die Weiterbildung des Getriebes nach dem Oberbegriff des Anspruchs 1 gemäss dem kennzeichnenden Teil dieses Anspruches erreicht. Einfacher aber weniger genau gesagt, liegt die Erfindung also darin, dass die Durchbiegung der Planetenradzapfen und die Torsion des Sonnenrades nicht mehr so gering wie möglich gehalten, sondern aneinander angepasst werden. Dadurch werden alle auf einer gemeinsamen Achse liegenden Planetenräder gleichmässig belastet. Die Verformungen der Planetenradachsen liegen hierbei letztlich nur in der Grössenordnung von 0,5 bis 2‰ des Durchmessers der Planetenradachsen. Weicht also die Biegelinie der Planetenradachse am freien Ende dieser Achse um einen derartigen Betrag von der Geraden ab, so muss das Sonnenrad an seinem freien Ende gegenüber seinem antriebsseitigen Ende am Umfang um das Doppelte des genannten Betrages verdreht sein. Dieser Faktor 2 ergibt sich aus den geometrischen Verhältnissen.

Durch die erfindungsgemässe Ausbildung ist es möglich, dass auch das Sonnenrad eine erhebliche Torsion erfährt, da nicht mehr ein Mindestmass an Torsion angestrebt werden muss. Daher kann das Sonnenrad im Durchmesser kleiner ausgeführt werden. Das erlaubt wiederum ein grosses Übersetzungsverhältnis. Die mögliche Kleinausbildung des Sonnenrades erlaubt durch die entsprechend grosse Ausbildung der Planetenräder ferner grosse und steife Planetenradachsen, die wiederum den Einsatz von Wälzlagern mit hoher Tragfähigkeit und Ermüdungsfestigkeit zwischen der Planetenradachse und den Planetenrädern ermöglicht. Das Getriebe ist aufgrund seiner Bauart auch leicht montierbar.

Die dargelegten Vorteile werden gemäss der Erfindung letztlich dadurch erreicht, dass die unter der Wirkung des Drehmomentes hervorgerufene Biegung der Planetenradachsen in Umfangsrichtung eine solche unterschiedliche Mittelpunktsverschiebung der Planetenräder mit sich bringt, dass unter Ausnutzung der gegenseitigen Verdrehbarkeit der auf einer Planetenradachse angeordneten Planetenräder eine gleichmässige Belastung der Verzahnungen und der Lagerungen aller Planetenräder bewirkt wird, obwohl das Sonnenrad eine erhebliche Torsion erfahren kann und auch die Zähne in erheblichem Masse gebogen und elastisch abgeplattet werden können. Selbstverständlich müssen sich all diese Verformungen immer unterhalb der Elastizitätsgrenze und der vorgegebenen Dauerfestigkeitsgrenze bewegen.

Soll gewährleistet sein, dass auch die Belastung jedes einzelnen Planetenrades über dessen Breite wenigstens angenähert konstant ist, so muss den Planetenrädern die Möglichkeit gegeben werden, sich an die Abweichung der Erzeugenden der Zahnflankenflächen des Sonnenrades von der achsparallelen Geraden auch dadurch anzupassen, dass sich die Planetenräder entsprechend schräg stellen. Um dies zu ermöglichen, müssen die Planetenräder im einfachsten Falle jeweils mit genügend Axialspiel auf ihrer gemeinsamen Achse sitzen.

Bevorzugt wird die Ausbildung nach Anspruch 2. Bei dieser sollte der Aussendurchmesser der Distanzscheiben so gewählt werden, dass einerseits die axialen Pressungen der Distanzscheiben nicht zu gross werden, andererseits aber auch der Durchmesser möglichst gering ist, um das Verschwenken der benachbarten Planetenräder gegeneinander in optimalem Umfang zu erlauben, ohne dass die Distanzscheiben zu dick werden.

Durch diese Zulassung der Schrägstellung der Planetenräder bei Anpassung der Biegelinie der Planetenradachse und der Torsionsverformung des Sonnenrades aneinander lässt sich also eine weitgehende Parallelität der im Eingriff befindlichen Zahnradflanken des Planetenrades und des Sonnenrades erreichen. Da die Verformungen, um die es hier geht, trotz ihres grossen Einflusses auf die Belastung der Zahnflanken sehr gering sind, können die Distanzscheiben dünn ausgeführt werden, so dass die Getriebeabmessungen dadurch nur wenig beeinflusst werden. Dementsprechend genügt für die optimale Einstellung der Planetenräder ein geringes Axialspiel zwischen den Distanzscheiben und den Planetenrädern, was für die Führung der Nadeln bei vollnadligen Lagern einen weiteren wesentlichen Vorteil mit sich bringt.

Ein gewisses Problem bei der Anpassung der Rotationsebene der Planetenräder an die Verformungen liegt darin, dass normalerweise das wegen seines grossen Durchmessers sehr drehsteife Hohlrad diese Verformungen nur wenig mitmacht. Im einfachsten Falle lässt man hier eine genügende Anpassung dadurch zu, dass nur die Planetenräder gehärtet sind, nicht jedoch das Hohlrad. Dann können sich die Flanken der Planetenräder in die Flanken des Hohlrades entsprechend eingraben. Die Gefahr von Grübchenbildungen ist hier wegen der geringen Hertzschen Pressung nicht zu befürchten. Die optimale Verteilung der Lasten über die Zahnflankenbreite wird bei einer solchen Ausführung jedoch erst bei längerem Betrieb erreicht. Bis dahin nehmen die Planetenräder eine Schräglage ein, die nicht voll der Schräglage der Planetenradachsen entspricht, sondern einer Mittellage zwischen der Neigung der Planetenradachsen und der Parallelen zur Getriebeachse. Dennoch wird hierdurch schon eine wesentliche Erhöhung der Belastbarkeit erreicht.

Soll das Getriebe auch in dieser Hinsicht optimiert werden, so wird es vorteilhaft gemäss Anspruch 3 ausgebildet. Der längsballige Schliff erlaubt einerseits ein optimales Anschmiegen der mit dem Sonnenrad im Eingriff befindlichen Zähne an die im Zylinderschnitt entsprechend gekrümmten Flanken des Sonnenrades und andererseits auch ein entsprechendes Anlegen der Zahnflanken des Planetenrades an die Zahnflanken des Hohlrades. Das Mass dieser „Längsballigkeit" der Zahnflanken der Planetenräder ist natürlich sehr gering.

Wegen der sehr viel geringeren Hertzschen Pressung zwischen den Planetenradzähnen und den Hohlradzähnen und wegen der geringeren

Zahnfussbiegebeanspruchung der Hohlradzähne ist es auch möglich, deren wirksame Zahnbreite an den jeweiligen Eingriffsstellen zwischen Planetenrad und Hohlrad wesentlich kleiner zu machen als die Planetenradzahnbreite. Insoweit ist eine Ausbildung gemäss Anspruch 4 besonders vorteilhaft. Diese kann bei einstückiger Ausführung des Hohlrades dadurch erreicht werden, dass im Bereich der axialen Stossfugen der Planetenräder im Hohlrad vorteilhaft vor dem Verzahnen schon Umfangsnuten eingearbeitet werden, deren Tiefe mindestens der Zahnhöhe des Hohlrades entspricht. Die Breite dieser Nuten ist dann so ausgeführt, dass noch eine tragende Zahnbreite von 60-90% der Planetenradzahnbreite verbleibt. Um an den axial gesehenen äusseren Planetenrädern symmetrische Verhältnisse zu erreichen, muss eine den Nuten entsprechende Randbearbeitung vorgesehen werden. Zweckmässig wird die Form der Nuten und der Randbearbeitung konisch ausgeführt, damit die Zahnbreite im Bereich des Zahnkopfes kleiner wird als am Zahnfuss. Insoweit wird die Ausbildung gemäss Anspruch 5 bevorzugt. In vielen Fällen kann dadurch das aufwendige Längsballigschleifen der Planetenradzähne eingespart werden. Durch die schmälere Ausführung der Hohlradzähne können nämlich andernfalls durch elastische oder auch unter Dauerbetrieb erzielte bleibende Verformung des Hohlzahnes entstehende starke Kantenträger unter Last vermieden werden. Ausserdem kann sich das Planetenrad dann entsprechend den Erfordernissen an den Eingriffsstellen zwischen Sonnenrad und Planetenrad leichter schräg stellen.

Die im Längsschnitt des Getriebes gesehen konische Ausführung der Zähne hat den weiteren Vorteil, dass im Bereich des Zahnkopfes am Hohlrad das formschlüssige Führungsverhältnis der Hohlradzähne gegenüber den Planetenradzähnen noch mehr vermindert wird, ohne dass die Zahnfussfestigkeit des Hohlradzahnes dadurch beeinträchtigt wird.

In vielen Fällen ist eine Weiterbildung gemäss Anspruch 6 vorteilhaft. Diese gewährleistet bei richtiger Auslegung, dass nicht nur alle Planetenräder einer Achse etwa die gleiche Umfangskraft aufnehmen, sondern auch über ihrer Breite etwa gleich belastet sind.

Die Anpassung der Verformung der Planetenradachsen an die Torsion des Sonnenrades kann auf verschiedene Weise erfolgen. So kann die Einspannung und/oder Biegesteifigkeit der Planetenradachsen an die Torsion des Sonnenrades angepasst werden. Diese Art der Anpassung wird man vorziehen, wenn sie durch Schwächung der Planetenradachsen bewirkt werden kann. Bei gegebener Dimensionierung der Planetenradachsen, also insbesondere dann, wenn diese nicht schwächer dimensioniert werden können, kann die Torsion des Sonnenrades entsprechend verändert werden, indem dieses beispielsweise ausgebohrt wird. Schliesslich lässt sich auch in einem rechnerischen Iterationsverfahren zur möglichst genauen Anpassung nach der angenäherten Anpassung des einen Elementes an das andere das andere Element erneut an das erstgenannte anpassen. Diese Schritte lassen sich mehrfach wiederholen.

Nachdem die Verformung in Umfangsrichtung bei der Torsion mit der zweiten Potenz des axialen Weges wächst, während die Verformung bei der Biegung mit der vierten Potenz des axialen Weges wächst, ist der erfindungsgemässe Ausgleich nur durch sehr sorgfältige Gestaltung der sich verformenden Teile optimal zu erreichen. Man kann somit vielfach nicht mit in axialer Richtung konstanten Trägheitsmomenten der Achsen arbeiten. In der Regel wird man den Ausgleich für eine Belastung des Getriebes wählen, die gleich dem gegebenen Betriebsdrehmoment ist. Theoretisch ist er dann auch für jeden Teillastzustand sichergestellt, da die Verformungen nach dem Hookeschen Gesetz proportional der Last sind.

Am besten wird die Verformung in Umfangsrichtung kompensiert, wenn die Planetenradachsen und das Sonnenrad so ausgebildet werden, dass die Abweichung der elastischen Biegelinie der Planetenradachsen jeweils gleich der halben Verformung der Axiallinie am Sonnenrad ist. Da die genannte Abweichung und die genannte Verformung an der Länge der Achsen und des Sonnenrades gemessen sehr klein sind, kann angenommen werden, dass die beiden Verformungen jeweils in zueinander und zur Getriebeachse parallelen Normalebenen zu der Ebene erfolgen, der jeweils die Achsen des Sonnenrades und des Planetenrades angehören. Projiziert man dann die eine Ebene auf die andere, so soll die seitliche Abweichung der genannten Biegelinie von der Ausgangsgeraden überall gleich der Hälfte der Abweichung der erwähnten Axiallinie von der Geraden sein.

Da die Torsion des Sonnenrades am Übergang des Sonnenrades in die Sonnenradwelle am grössten ist, muss auch die Neigung der Planetenradachsen gegen die Achsparallele am freien Ende dieser Achsen am grössten sein. Um dies zu erreichen, kann man die Biegesteifigkeit der Planetenradachsen vom Planetenradträger zum freien Ende der Achse hin abnehmen lassen, sofern die Achsen stark genug sind.

Das kann dadurch bewirkt werden, dass die Planetenradachsen hohl sind, wobei z.B. der Durchmesser der Bohrung der Planetenradachse vom freien Ende der Achse zu deren eingespanntem Ende hin abnimmt. Diese Abnahme kann konisch oder auch stufenförmig erfolgen. Eine andere Möglichkeit besteht darin, dass man den Durchmesser der Planetenradachsen von deren freiem Ende her stufenweise zunehmen lässt. Dies bringt jedoch den Nachteil mit sich, dass unterschiedliche Lager und unterschiedliche Bohrungsdurchmesser der Planetenräder erforderlich sind.

Der Verlauf der erwähnten Axiallinie des Sonnenrades in verformtem Zustand ist auch im mittleren Eingriffsbereich des planetenradträgerseitigen Planetenrades nicht wieder achsparallel. Wenn die Einspannung der Planetenradachsen am Planetenradträger nicht schon von Hause aus nachgiebig genug ist, um dieses geringe Mass der Abweichung von der Achsparallelen zu kompensieren, kann man die Planetenradachsen am Planetenradträger nachgiebig einspannen, indem man beispielsweise die Planetenradachsen im Einspannbereich mit einer gut ausgerundeten Ringnut versieht. Eine andere Möglichkeit besteht darin, dass beispielsweise an beiden Seiten der Einspannstelle im Planetenradträger radiale Schlitze angeordnet werden. Diese Schlitze machen dann die ganze Einspannung nachgiebig.

In der Praxis werden die Planetenradachsen vorzugsweise in den Planetenradträger eingeschrumpft.

Die Ausbildung gemäss Anspruch 9 hält den Lochleibungsdruck der Einspannung gering.

Eine optimale Anpassung der Biegelinie und der Verformung der erwähnten Axiallinie in Umfangsrichtung aneinander lässt sich nur dann erreichen, wenn auch an allen Stellen die Tangenten der beiden Verformungskurven aneinander angepasst sind. Nachdem die maximale Abweichung dieser beiden Kurven von der Geraden jeweils nur sehr gering ist, genügt es, wenn man den Tangens der Biegelinie über deren ganzer Länge gleich dem halben Tangens der durch Verformung der erwähnten Axiallinie gebildeten Torsionslinie macht. Um dies zu erreichen, kann man das Wellenstück, welches das Sonnenrad trägt und über welches das Drehmoment in das Sonnenrad eingeleitet wird, gemäss der Lehre des Anspruchs 16 entsprechend dimensionieren. Dadurch wird die Randbedingung erfüllt, dass die Neigung der beiden Kurven an dem Planetenradträger abgewandten Ende des Sonnenrades einander entspricht, also sich wie 1:2 verhält.

Eine weitere Anpassung ist noch dadurch möglich, dass man auch das Sonnenrad hohl bohrt. Dabei lässt sich ebenfalls durch entsprechende Profilierung der Bohrung im Sonnenrad die Torsionsverformung desselben an gewünschte Werte anpassen. Ein solches Hohlbohren wird allerdings in der Praxis nur dann in Frage kommen, wenn das Getriebe nur ein relativ niedriges Übersetzungsverhältnis, also ein grosses Sonnenrad, aufweisen soll.

Ergänzend ist noch darauf hinzuweisen, dass bei hohl gebohrten Planetenradachsen die Hohlbohrung derselben sich bei der bevorzugten Ausführungsform der Erfindung vom freien Ende der Planetenradachse nur bis zum Beginn des Einspannbereichs der Planetenradachse erstreckt.

In vielen Fällen müssen die Planetenradachsen aus Platzgründen so dünn gemacht werden, dass ihre Durchbiegung in Umfangsrichtung grösser als erwünscht ist. Das ist z.B. der Fall, wenn die erforderliche Zahnfussfestigkeit eine bestimmte Mindestzahnhöhe erfordert. Auch schränkt die erforderliche Wälzlagerung der Planetenräder den Achsendurchmesser ein. Schliesslich wird auch mit wachsender Achsenlänge die Durchbiegung der Achsen grösser.

Die unerwünscht starke Durchbiegung der Achse lässt sich durch die Ausbildung nach Anspruch 10 auf das gewünschte Mass verringern. Vorteilhaft werden hierbei die erforderlichen Abstützungen der Achsen gemäss Anspruch 11 zu einem Stützring zusammengefasst, der eine gleiche Durchbiegung aller Achsen gewährleistet. Vorteilhafte Ausbildungen sind in den Ansprüchen 12, 13 und 18 gekennzeichnet.

Die Ausbildung nach Anspruch 19 erlaubt es, die Verformung der Achsen besonders gut der Torsion des Sonnenrades anzupassen, wobei die Ausbildung nach Anspruch 20 bevorzugt ist. Die Ausbildung nach Anspruch 14 hat den Vorteil besonders hoher Drehsteifigkeit des vom Planetenradträger, den Axialstegen und der Stützscheibe gebildeten Käfigs. Durch die Bemessung der Axialstege lässt sich die Drehsteifigkeit leicht beeinflussen.

Wenn die Planetenradachse infolge ihres Schlankheitsgrades an beiden Enden, also im Planetenradträger und in der Stützscheibe, abgestützt sein muss, ist eine bauchige Druckbiegung derselben in vielen Fällen kaum vermeidbar. Hier ist eine Konstruktion geeignet, wie sie in Anspruch 21 gekennzeichnet ist. Durch die Momenteinleitung im axial mittleren Bereich des Hohlsonnenrades entsteht auch an den Sonnenradzahnflanken eine bauchige Verdrillungsform. Der Verdrillung des Planetenradträgers kann dadurch Rechnung getragen werden, dass die Stelle der Momenteinleitung von der Sonnenradwelle in das Sonnenrad aus der Mitte um ein entsprechendes Mass verschoben ist. Vorteilhaft hat in diesem Fall die das Sonnenrad bildende Hülse eine innere Keilverzahnung, die mit dem komplementär ausgebildeten Ende der Sonnenradwelle im Eingriff steht.

Die Ausbildung gemäss Anspruch 22 gewährleistet eine besonders günstige Biegelinie der Planetenradachsen im Falle des Anspruchs 21.

Die durch die Erfindung ermöglichte, ausserordentlich gleichmässige, dem Idealfall schon sehr nahekommende Verteilung der Zahnbelastungen und der Lagerkräfte auf den nebeneinander angeordneten Planetenrädern und die schmale Ausführungsform der Planetenräder erlauben es, die bei der Getriebeberechnung anzusetzenden Lastminderungsfaktoren wesentlich günstiger zu halten. Das erlaubt es wieder, den Gesamtdurchmesser des Getriebes ohne Verringerung des Betriebsdrehmomentes zu reduzieren. Hierin liegt ein ganz wesentlicher Vorteil, da die Kosten für geschmiedete Ringe zur Herstellung von Hohlzahnrädern exponentiell mit dem Durchmesser wachsen und auch die spangebende Bearbeitung für die Innenverzahnung bei grossen Innenzahnrädern weitaus grössere und teurere Maschinen erfordert als die Verzahnung kleinerer Durchmesser. Der durch die Erfindung erreichte kleinere Durchmesser erlaubt es wiederum, in vielen Fällen so klein zu werden, dass die Innenverzahnungen des Hohlrades geräumt werden können.

Gemäss einer bevorzugten Anwendungsform des Getriebes nach der Erfindung ist dieses als in eine Seilwinde integriertes Getriebe für diese ausgebildet. Dadurch kann der Seiltrommeldurchmesser niedrig gehalten werden. Da bei Seiltrommeln die maximale Seillast die die Dimensionierung bestimmende Grösse ist, wird bei dem durch die Erfindung ermöglichten kleineren Seiltrommeldurchmesser das erforderliche Abtriebsmoment des Getriebes kleiner, wodurch wiederum eine weitere Verkleinerung des Getriebes ermöglicht ist. Schliesslich können dadurch auch der Antriebsmotor und die Haltebremse kleiner gehalten werden. Da bei in die Seiltrommel integriertem Umlaufgetriebe die Seiltrommel normalerweise am Aussenumfang des Getriebes gelagert ist, wird durch den kleinen Getriebedurchmesser auch die Umfangsgeschwindigkeit an den Lagern kleiner, was wiederum bei der hier in erster Linie in Frage kommenden Wälzlagerung zu einer Vergrösserung der Ermüdungszeit führt.

Ein weiterer Vorteil der Erfindung liegt darin, dass wegen der sehr guten Lastverteilung an den Planetenrädern und deren Lagern und der optimalen Berücksichtigung der erhöhten Verdrillung des Sonnenrades die Zahl der Planetenradachsen von z.B. drei auf fünf am Umfang ohne zusätzlichen Lastenausgleich vergrössert werden kann. Auch das wirkt auf eine Erhöhung der Bauraum- und Materialausnützung hin. Die grosse Zahl der bei der Erfindung möglichen Planetenradachsen kann zwar die Torsionsspannung am Sonnenrad vergrössern. Diese bleibt jedoch entsprechend dem heutigen Stand der Werkstofftechnik in zulässigen Grenzen.

Die Erfindung umfasst auch eine Seilwinde mit einem vorzugsweise in der Seiltrommel angeordneten Getriebe gemäss Erfindung.

Nachfolgend sind bevorzugte Ausführungsformen der Erfindung als erläuternde Beispiele beschrieben. Es zeigen:

Fig. 1 schematisch einen Axialschnitt durch das Getriebe, wobei nur die für das Getriebe wesentlichen Teile dargestellt sind;

Fig. 2 die Wälzkreise des Sonnenrades eines Planetenrades und des Hohlrades sowie die erfindungsgemäss verwirklichten Verformungen am Sonnenradumfang und an der Planetenradachse;

Fig. 3 perspektivisch das Sonnenrad in durch die auftretenden Torsionskräfte verdrilltem Zustand;

Fig. 4 schematisch einen Schnitt gemäss der Linie IV-IV aus Fig. 1 in vergrössertem Zustand, welcher die Verformung der Planetenradachse und die Verlagerung der Planetenräder auf der Achse entsprechend der Verformung der Achse und der Torsion des Sonnenrades erkennen lässt;

Fig. 5 stark schematisiert ein Ausführungsbeispiel der Planetenradachsen, bei dem die Biegesteifigkeit mit wachsendem Abstand vom Planetenradträger abnimmt;

Fig. 6 schematisch einen Axialschnitt durch eine Ausführung des Getriebes, bei welcher die Planetenradachsen über eine Stützscheibe und Axialstege auf den Planetenradträger abgestützt sind;

Fig. 7 eine Ausführungsmöglichkeit für die Planetenradachse, bei welcher deren Biegesteifigkeit im Abstand vom Planetenradträger grösser ist als nahe demselben;

Fig. 8 schematisch in vergrössertem Zustand einen Schnitt in einer Normalebene zur Getriebeachse durch Fig. 6 zwischen zwei benachbarten Planetenrädern;

Fig. 9 in ähnlicher Darstellung wie Fig. 4 die Abstützung der Achsen in der Stützscheibe im Zylinderschnitt IX-IX aus Fig. 8 in übertrieben dargestelltem verformtem Zustand;

Fig. 10 in gleicher Darstellung wie Fig. 9 eine Achsenabstützung mit einem besonderen elastischen Lager für die Achse in der Stützscheibe;

Fig. 11 eine besondere Achsenkonstruktion, die zusammen mit einer Stützscheibe und Axialstegen von Vorteil ist, und

Fig. 12 im Axialschnitt eine Ausbildung des Getriebes gemäss den Ansprüchen 21 und 22.

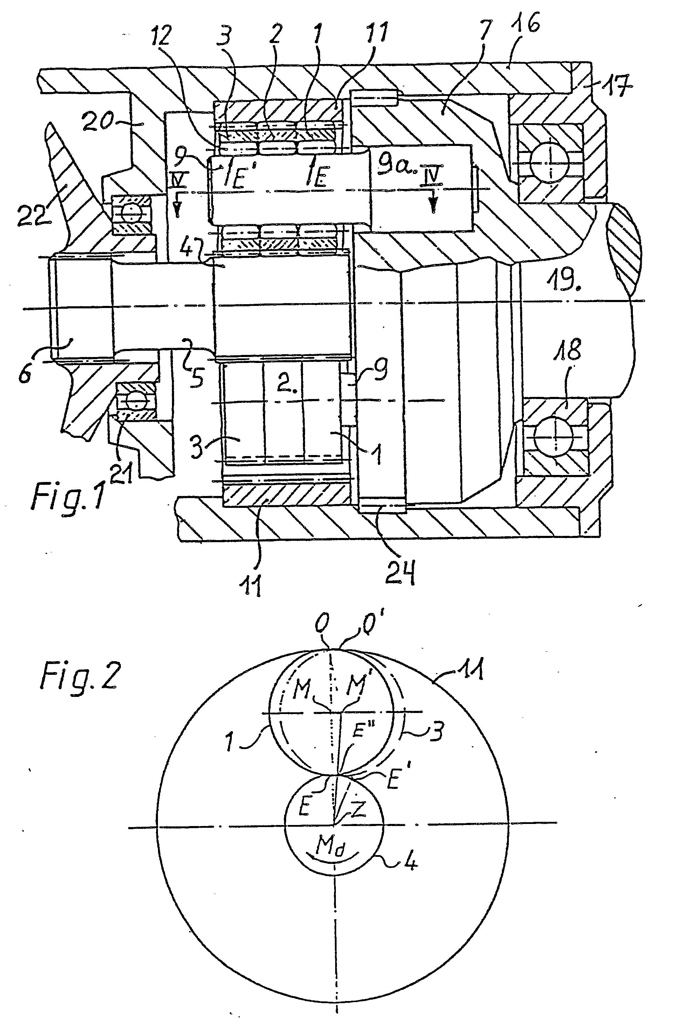

Das in Fig. 1 gezeigte Getriebe besitzt ein Gehäuse 16, in dem an der rechten Seite mittels seiner Stirnwand 17 und des Kugellagers 18 auf der Welle 19 der Planetenradträger 7 teilweise gelagert ist. Das abgebrochene, in Fig. 1 nicht mehr sichtbare Ende der Planetenradträgerwelle 19 stellt die Abtriebswelle des Getriebes dar.

Etwa in der Mitte des Gehäuses 16 besitzt dieses eine angegossene Querwand 20, in welcher zentral mittels eines Kugellagers 21 ein Antriebsrad 22 gelagert ist, das auf einem Zahnwellenprofil 6 der Sonnenradantriebswelle 5 sitzt. Die Sonnenradantriebswelle 5 ist mit dem Zahnwellenprofil 6 und dem Sonnenrad 4 in einem Stück gefertigt.

Das Sonnenrad 4 kämmt beispielsweise mit fünf Planetenradanordnungen. Jede Planetenradanordnung besteht im Ausführungsbeispiel aus drei Planetenrädern 1, 2, 3 gleicher Abmessungen, die axial hintereinander mit geringem Axialspiel jeweils auf einer Planetenradachse 9 gelagert sind. Weniger als drei Planetenräder auf einer Achse lassen das Ziel der Erfindung nur unvollkommen erreichen. Mehr als fünf Planetenräder pro Achse sind meist zu aufwendig. Bevorzugt werden drei bis vier Räder pro Achse. Die fünf Planetenradachsen 9 sind jeweils mit um 10% des Durchmessers verdickten Enden 9a in gleichmässig über den Umfang des Planetenradträgers 7 verteilte, achsparallele Bohrungen eingeschrumpft, wie dies aus Fig. 1 ersichtlich ist. Der besseren Führung wegen ist der Planetenradträger 7 mittels eines Nadellagers 24 an seinem linken Ende noch einmal in dem Gehäuse 16 gelagert.

Die Planetenradanordnungen 1, 2 und 3 besitzen in der Regel gehärtete Zahnflanken und kämmen jeweils ferner mit einem in das Gehäuse 16 eingeschrumpften, innenverzahnten Hohlrad 11, das noch zusätzlich gegen Drehung im Gehäuse 16, beispielsweise durch Verstiftung, gesichert sein kann und dessen Zahnflanken nicht gehärtet, sondern z.B. nur vergütet sind. Jedes der drei auf einer gemeinsamen Planetenradachse 9 sitzenden Planetenräder 1, 2 und 3 ist mittels eines Nadellagers auf der Planetenradachse 9 frei drehbar. Die axialen Sicherungen der Planetenräder und sonstige Bauteile sekundärer Bedeutung sind der Übersichtlichkeit halber in Fig. 1 nicht dargestellt.

Soweit bisher im Zusammenhang mit dem gezeigten Ausführungsbeispiel beschrieben, ist die Konstruktion bekannt.

Gemäss der Erfindung ist das das Zahnwellenprofil 6 mit dem Sonnenrad 4 verbindende Wellenstück 5 auf einen geringeren Durchmesser abgedreht, um dadurch zu gewährleisten, dass das Mass der Verdrillung des Sonnenrades 4 unter dem Einfluss der von den Rädern 1, 2 und 3 der fünf Planetenradachsen ausgeübten Umfangskräfte tatsächlich am in Fig. 1 linken Ende des Sonnenrades 4 am grössten ist. Bei entsprechender Konstruktion kann es aber auch angezeigt sein, dass man das Wellenstück 5 im Durchmesser nicht geringer als den Fusskreisdurchmesser des Sonnenrades 4, sondern grösser als diesen oder sogar grösser als den Kopfkreisdurchmesser des Sonnenrades 4 hält. Das ist dann angezeigt, wenn die Neigung der Planetenradachsen in Umfangsrichtung unter dem Einfluss der Getriebekräfte am freien Ende der Achsen 9 nicht wesentlich grösser ist als am eingespannten Ende. Das ist z.B. dann der Fall, wenn man die Achsen 9 gemäss Fig. 1 am Ansatz an das verdickte Achsenteil 9a mit einer (der Kerbwirkung wegen gut ausgerundeten) Umfangsrille versieht.

Am einfachsten lässt sich die Biegsamkeit der Achsen 9 durch entsprechende Festlegung des Durchmessers regeln. Das hat jedoch Grenzen sowohl nach oben als auch nach unten.

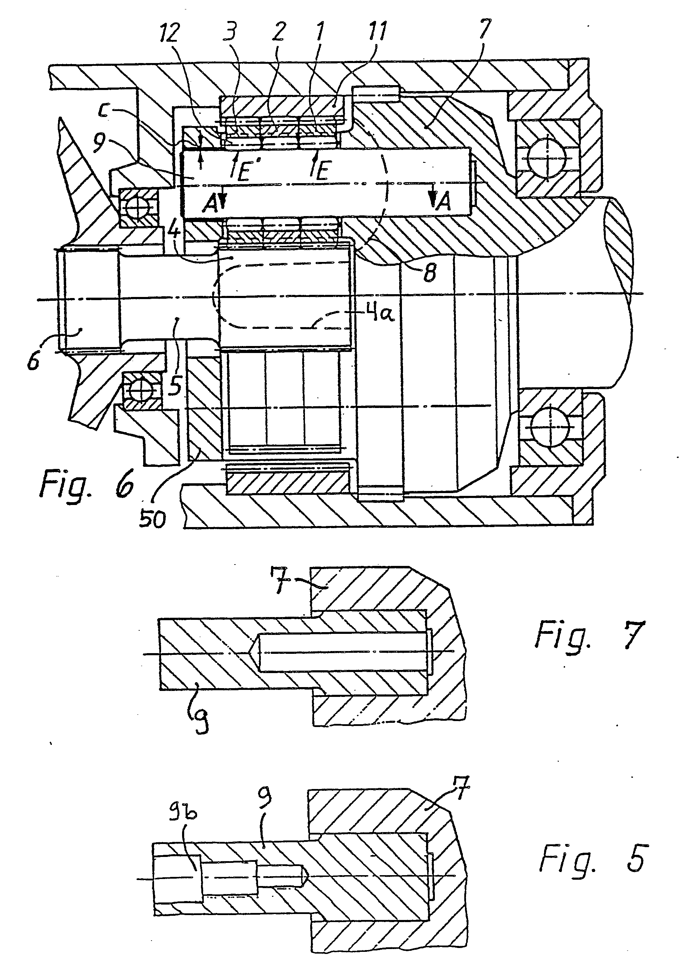

Wenn die in Fig. 1 gezeigten massiven Achsen der Planetenräder zu steif sind, so können sie – wie in Fig. 5 gezeigt – hohl gebohrt werden, so dass ihre Biegsamkeit gegenüber der massiven Ausführung erhöht ist. Da die Steigung der durch die Torsion verformten Axiallinien am Umfang des Sonnenrades 4 am in Fig. 1 linken Ende des Sonnenrades am grössten ist, ist die Bohrung 9b in den Achsen 9 abgesetzt ausgeführt; d.h., im Bereich des äussersten linken Planetenrades 3 ist sie am grössten, im Bereich des mittleren Planetenrades 2 hat sie einen mittleren Durchmesser, im Bereich des äussersten rechten Planetenrades 1 hat sie den geringsten Durchmesser. Sie endet etwa zusammen mit der rechten Flanke des rechten Planetenrades 1.

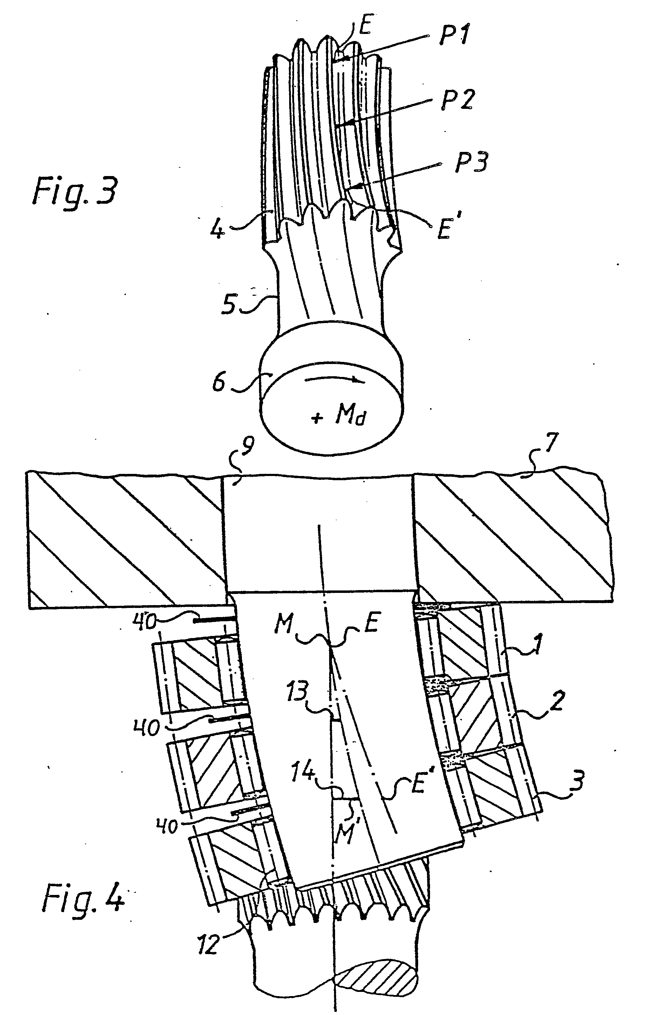

Auf diese Weise ist die Biegelinie der Planetenradachsen der Torsion des Sonnenrades 4 angepasst. Durch diese Verbiegung der Planetenradachsen, die in Fig. 4 stark übertrieben dargestellt ist, werden, wie am besten aus Fig. 4 ersichtlich, die auf einer gemeinsamen Achse 9 sitzenden Planetenräder 1, 2 und 3 entsprechend der Biegung der Achse auseinandergefächert. Um eine gegenseitige Störung der Planetenräder 1, 2 und 3 des Trägers 7 an der in Fig. 4 rechten Seite zu vermeiden, sind zwischen den Planetenrädern und zwischen dem Rad 1 und dem Träger 7 entsprechende Distanzscheiben 40 vorgesehen, die auch die Lagernadeln 12 an dem Austreten aus dem Lagespalt zwischen den Planetenrädern 1, 2, 3 und der Achse 9 hindern. Da die Biegelinie der Achse 9 der Verformung der Zähne des Sonnenrades 4 durch Torsion, wie diese in Fig. 3 dargestellt ist, entspricht, greifen die mit dem Sonnenrad 4 im Eingriff befindlichen Zähne der drei Zahnräder 1, 2 und 3 jeweils so an den Flanken der Zähne des Sonnenrades 4 an, dass die beiderseitigen Zahnflanken nicht mehr nur an einem Ende der Zähne der einzelnen Planetenräder im Eingriff stehen, sondern weitgehend über der ganzen Breite dieser Zähne. Hierbei muss allerdings noch die Einschränkung gemacht werden, dass die Erzeugenden der Zahnflanken der Planetenräder 1, 2, 3 gerade sind, während die Erzeugenden der Zähne des Sonnenrades 4 in torsionsbelastetem Zustand Kurven sind. Die Krümmung dieser Kurven ist jedoch in der Praxis meist so gering, dass die unterschiedliche Belastung der Zahnflanken der Planetenräder 1, 2 und 3 über deren Breite vernachlässigbar klein ist, also ohne Überlastung des Materials durch elastische Verformung der miteinander im Eingriff befindlichen Zahnflanken ausgeglichen werden kann. Genügt bei höherer Anforderung an die Ermüdungsfestigkeit diese Anpassung der Geraden der Planetenräder an die Kurven des Sonnenrades nicht, dann besteht noch die in der Praxis gegebene Möglichkeit, dass die Zahnflanken der Planetenräder wie oben erläutert längsballig geschliffen werden. Diese längsballig geschliffenen Zähne der Planetenräder tragen bei dem Getriebe gemäss der Erfindung auch der Forderung Rechnung, dass sich die Planetenräder auch gegenüber der Hohlradverzahnung in erforderlichem Masse schräg stellen können, ohne dass es dort zu Verkantungen kommt.

Durch entsprechendes Balligschleifen lassen sich Mängel in der Anpassung der Achsenbiegelinie an die Torsion des Sonnenrades vollständig ausgleichen.

Ebenso können Verkantungen dadurch vermieden werden, dass die wirksame Zahnbreite am Hohlrad für jedes Planetenrad schmaler gehalten ist als die Zahnbreitseite des Planetenrades.

Nachfolgend seien die geometrischen Zusammenhänge näher erläutert.

Der Einfachheit halber wird dabei in zulässiger Weise angenommen, dass das Getriebe nicht umläuft, sondern dass der Planetenradträger 7 und das Hohlrad 11 stillstehen, obwohl bereits auf die Sonnenradwelle 5 das volle Drehmoment aufgebracht ist. Hierbei werden nun von den drei Planetenrädern 1, 2 und 3 jeweils die Zahnkräfte p1, p2 und p3 als Reaktionskräfte auf die Verzahnung des Sonnenrades im Zahneingriffsbereich aufgebracht. Dabei wird die Stelle, an welcher die Zahnkraft p1 in der Mitte des ersten Planetenrades 1 zusammengefasst gedacht an der Verzahnung des Sonnenrades 4 angreift, mit M bezeichnet.

Der Punkt E kennzeichnet die Lage, um welche die im Eingriff befindliche Zahnflanke des Sonnenrades 4 im Bereich des Planetenrades 1 durch die Torsion des Sonnenrades aus der ursprünglichen Lage gemäss Fig. 2 ausgewandert ist. Dieser Punkt E ist in bezug auf das Planetenrad 1 der Nullpunkt, von dem aus die Verformungen des Sonnenrades und der Planetenradachsen einander entsprechen müssen. In der Zylinderprojektion gemäss Fig. 2 fällt dann der Punkt M, um den die Planetenradachse im Bereich des Planetenrades 1 ausgelenkt ist, noch mit dem Punkt E zusammen. Unter dem Einfluss der Torsion des Sonnenrades 4 ist nun das Planetenrad 2 ein Stück und das Planetenrad 3 ein grösseres Stück im Hohlrad 11 abgerollt, so dass nun der Eingriffspunkt des Planetenrades 3 mit dem Hohlrad 11 von O nach O' ausge-

wandert ist. Die Eingriffsstelle des Planetenrades 3 mit dem Sonnenrad 4 ist, wie aus den Fig. 2 und 4 ersichtlich, gegenüber dem Punkt E bis zum Punkt E' verschoben (bei dieser Betrachtung wird der Einfachheit halber jeweils die von jedem der drei Zahnräder 1, 2 und 3 ausgeübte Kraft als nur an einem Punkt, nämlich in der Mitte der Zahnflanke, wirkend angenommen). Diese Eingriffsstelle E', in welcher jetzt die Zahnflanken aneinanderliegen, darf nicht mit dem theoretischen Wälzpunkt E" verwechselt werden, der unter der elastischen Verformung und durch das Abrollen des Planetenrades 3 in Fig. 2 bis zu dem Punkt E" gewandert ist, an welchem die Verbindungslinie Z-M' den Wälzkreis des Sonnenrades 4 schneidet. Um einwandfreie Eingriffsverhältnisse zu haben, muss hierbei nun die Planetenradachse 9 nicht etwa um das gleiche Mass verschoben werden. Es genügt, wenn die Achse 9 auf der Höhe des Angriffspunktes der Lagerkraft, hervorgerufen durch die Zahnkraft p3, um halb so viel in Umfangsrichtung verlagert wird, wie eine Erzeugende auf der Höhe des Wälzkreises des Sonnenrades 4 unter dem Einfluss der Torsion gegenüber dem Punkt E verlagert wird. Diese Beziehung lässt sich rechnerisch aufgrund der Abrollverhältnisse in einem Planetengetriebe ermitteln.

Nach Obigem wird durch die Abstimmung der Verformungen von Sonnenrad und Planetenradachsen aufeinander ein vollständiges und gleichmässiges Anliegen der Planetenradzahnflanken an den Flanken des Sonnenrades 4 erreicht, was wiederum die oben ausführlich dargelegte optimale Belastbarkeit des Getriebes mit sich bringt.

Es gibt viele Möglichkeiten für die Beeinflussung der Biegelinie der Planetenradachsen.

Die Planetenradachse ist am besten jeweils in eine entsprechende Bohrung des Planetenradträgers 7 eingeschrumpft. Des guten Schrumpfsitzes wegen ist der eingeschrumpfte Teil der Planetenradachse zweckmässig grösser als der die Planetenräder tragende Teil.

Bohrt man die Planetenradachse auf ihrer ganzen Länge hohl, so hat die ganze Achse eine grosse, über der Länge konstante Biegeweichheit.

Lässt man die Bohrung nur ein kurzes Stück in den eingeschrumpften Teil hineinragen, so ist die Biegelinie nicht wesentlich anders als bei durchlaufender Bohrung. Der Schrumpfsitz ist jedoch ein festerer. Das gleiche lässt sich erreichen, wenn man bei durchlaufender Bohrung diese im eingeschrumpften Bereich der Achse mit einem stramm sitzenden Bolzen ausfüllt.

Die Biegsamkeit der Achsen kann auch durch eine Mehrzahl von eingestochenen Umfangsnuten erhöht werden. Die Tiefe der Umfangsnuten kann dabei mit wachsendem Abstand vom Planetenradträger zunehmen.

Um von Anfang an eine stärkere Neigung der Achse zu ermöglichen, können zu beiden Seiten der Achse radiale Schlitze 8 (Fig. 6) nach Art von Rundkeilnuten in den Planetenradträger eingefräst sein.

Wie Berechnungen und Versuchsreihen der Anmelderin gezeigt haben, liegt das Hauptproblem bei der Anpassung der Biegelinien der Planetenradachsen an die Torsion des Sonnenrades seltener darin, wie man durch entsprechend biegeschlaffe Ausbildung der Achsen deren Durchbiegung an die starke Torsion des Sonnenrades anpassen kann, sondern in den häufigeren Fällen darin, wie man die Achsen biegesteif genug ausbilden kann, um ihre Durchbiegung nicht grösser werden zu lassen, als dass sie der Torsion des vorzugsweise bereits torsionsweich ausgebildeten Sonnenrades entspricht. In der Praxis ist nämlich der Dicke der Planetenradachsen sehr rasch eine Grenze gesetzt. Das liegt zum einen daran, dass aus Gründen der Zahnfussfestigkeit der Modul der Verzahnung ausreichend gross gewählt werden muss, wodurch der Fusskreis der Verzahnung relativ klein wird, was wiederum den maximalen Achsendurchmesser beschränkt. Da in der Praxis meist nur eine Wälzlagerung der Planetenräder in Frage kommt, nimmt diese auch einen erheblichen radialen Raum ein. Hinzu kommt, dass die Wälzlagerung—meist Nadellager—verhältnissmässig reichlich dimensioniert sein muss, um die nicht geringen Lagerkräfte auch im Dauerbetrieb sicher übertragen zu können. Ein weiterer Grund dafür, dass die Planetenradachsen relativ steif gehalten werden müssen, ist dann gegeben, wenn die Planetenradachsen verhältnismässig lang sind, also wenn beispielsweise nicht drei, sondern vier Planetenräder axial nebeneinander auf einer Achse sitzen sollen.

Die in den Fig. 6 und 8 bis 10 gezeigte Getriebekonstruktion trägt diesen Überlegungen und Notwendigkeiten Rechnung. Sie entspricht weitgehend der in Fig. 1 gezeigten Konstruktion. Gleiche Bezugszeichen kennzeichnen daher gleiche Teile. Nachfolgend wird nur auf die Unterschiede des Getriebes gemäss Fig. 6 gegenüber dem Getriebe gemäss Fig. 1 eingegangen.

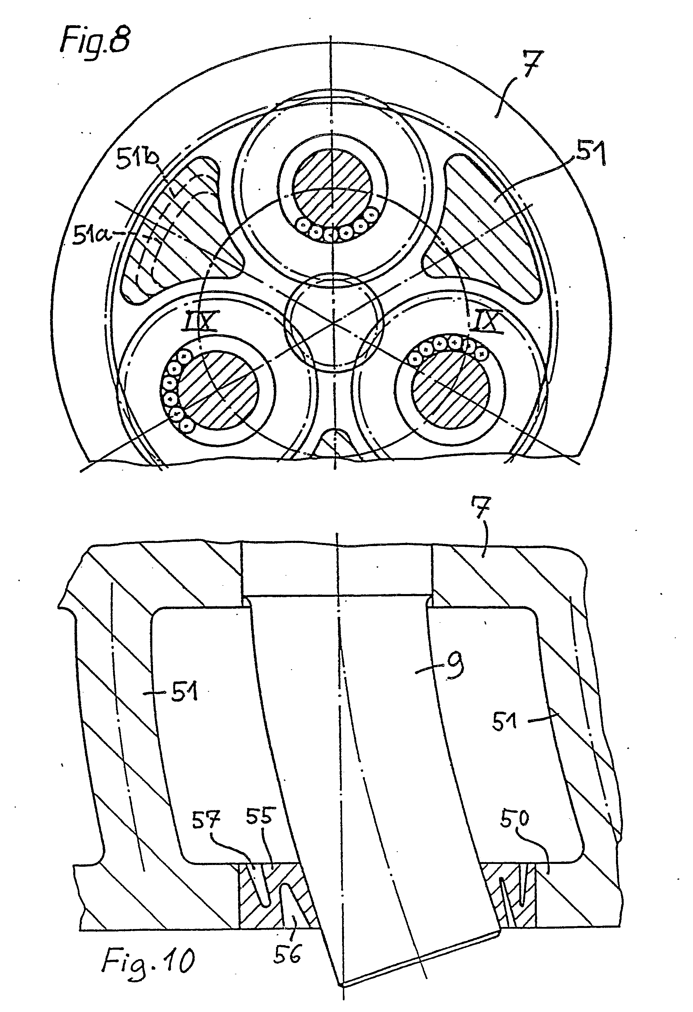

Bei dem Getriebe gemäss Fig. 6 ist der Planetenradträger 7 einstückig mit einer die freien Enden der Planetenradachsen 9 abstützenden ringförmigen Stützscheibe 50 ausgebildet. Die Stützscheibe 50 ist, wie am besten aus Fig. 8 ersichtlich, von den Raum für die Planetenräder freilassenden, vom Planetenradträger abragenden Axialstegen 51 getragen, die jedenfalls dann, wenn sie einer starken Torsion des vom Käfig 7, der Stützscheibe 50 und den Axialstegen 51 gebildeten Planetenradkäfigs verhindern sollen, stark dimensioniert sein müssen. Eine derartig starke Dimensionierung ist in Fig. 8 gezeigt. Um anzudeuten, dass je nach den Gegebenheiten auch eine geringere Dimensionierung zweckmässig sein kann, sind andere Aussenkonturen 51a und 51b für die Axialstege in Fig. 8 gestrichelt eingezeichnet.

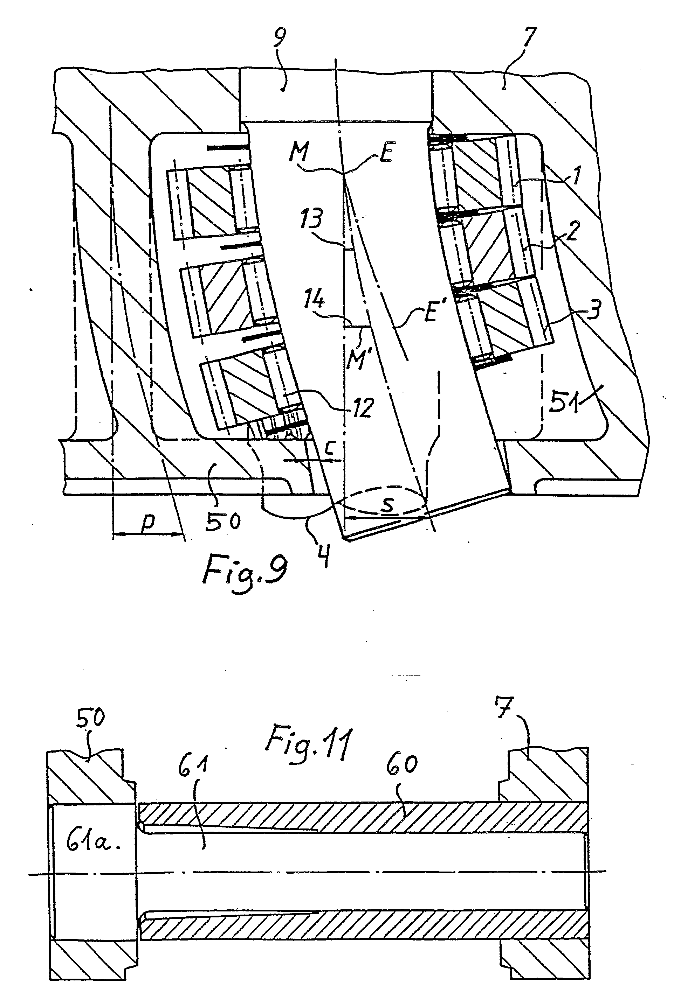

Die Stützscheibe 50 sollte in sich steif sein. Man wählt daher ihren Aussendurchmesser zweckmässig nur wenig kleiner als den Kopfkreisdurchmesser der Verzahnung des Hohlrades 11 und ihren Innendurchmesser nur wenig grösser als den Kopfkreisdurchmesser des Sonnenrades 4. Durch die einstückige Ausbildung des erwähnten Käfigs ist eine maximale Torsionssteifigkeit desselben gewährleistet. Diese kann jederzeit ohne grossen Aufwand durch Verringerung des Querschnitts der Stützstege 51 auf ein ggf. angezeigtes geringeres Mass reduziert werden. Um eine Montage der Planetenradachsen 9 bei der Konstruktion nach Fig. 6 durch die Stützscheibe hindurch zu ermöglichen, ist der Durchmesser der Achsen 5 auf der ganzen Länge konstant. Die die dem Planetenradträger abgewandten Enden der Achsen 9 aufnehmenden Bohrungen in der Stützscheibe 12 sind nur um das geringe Radialspiel c (Fig. 6) grösser als der Durchmesser der Achsen 9 in diesem Bereich. Durch dieses Radialspiel c wird gewährleistet, dass in verformtem Zustand, wie er in Fig. 9 dargestellt ist, bei welchem der Käfig ebenfalls verdrillt ist, das freie Ende der Achsen 9 nicht jeweils durch die erheblich weniger verformte Wandung der Bohrungen in der Stützscheibe in eine stärker zur Achse des Getriebes parallele Lage gezwungen wird. Die freien Enden der Achsen 9 werden vielmehr nur nachgiebig abgestützt, ohne dass ein zusätzliches Biegemoment auf diese Enden ausgeübt wird. Das erleichtert die Anpassung der Biegelinie der Achsen 9 an die Verdrillung des Sonnenrades, die ja im Bereich der Enden der Planetenradachsen 9 am grössten ist. Der Käfig darf ein gewisses Mass an Torsionssteifigkeit nicht überschreiten, da anderenfalls die Biegelinie der Achsen sich der Form eines Fragezeichens annähern würde.

Würde man die freien, also die dem Planetenradträger abgewandten Enden fest einspannen, so würde dies zu einer S-förmigen Verformung der Planetenradachsen führen, die natürlich auch unerwünscht wäre.

In Fig. 9 erkennt man ferner, dass durch das Spiel c der Achsen in den sie abstützenden Bohrungen der Stützscheibe 50 die hier mit S bezeichnete Auslenkung der Achsenenden wesentlich grösser ist als die entsprechende, mit p bezeichnete Torsion des Käfigs. Die unverdrillte Ausbildung des Käfigs ist in Fig. 9 soweit erforderlich gestrichelt angedeutet. Der Umriss des Sonnenrades ist in Fig. 9 bei 4 gezeigt.

Unter Umständen kann bei einer Getriebekonstruktion gemäss den Fig. 6, 8 und 9 eine Konstruktion der Planetenradachsen 9 gemäss Fig. 7 angezeigt sein. Bei dieser ist der im Planetenradträger 7 eingespannte Bereich der Achsen hohl gebohrt. Eine verdickte Ausbildung des in den Planetenradträger 7 eingeschrumpften Bereiches der Achsen 9 ist bei der in den Fig. 6 und 9 gezeigten Ausbildung nicht möglich. Will man eine derartige eingeschrumpfte Ausbildung ermöglichen, so empfiehlt sich die Lagerung des freien Endes der Planetenradachsen 9 gemäss Fig. 10. Fig. 10 entspricht im wesentlichen Fig. 9, lediglich die erwähnte Lagerung des freien Endes der Planetenradachsen 9 in der Stützscheibe 50 ist eine andere. Bei der in Fig. 9 gezeigten Konstruktion ist die das Achsenende 9 abstützende Bohrung in der Stützscheibe 50 erheblich grösser gehalten und mit einer hochelastischen Büchse 55 ausgefüttert. Der Aussendurchmesser der Büchse 55 ist grösser als der Durchmesser der die Achse 9 eingeschrumpft tragenden Bohrung im Planetenradträger 7. Dadurch ist ein Einschrumpfen des verdickten Endes der Achsen 9 in den Planetenradträger 7 möglich. Der wesentliche Vorteil der Ausbildung gemäss Fig. 10 liegt jedoch darin, dass die zweckmässig ebenso wie der Käfig aus hochwertigem Stahl ausgebildete Büchse 55 durch zwei von verschiedenen Seiten eingebrachte Stirnnuten 56 und 57 hochelastisch ausgebildet ist. Die Büchse hat dadurch, wie aus Fig. 10 ersichtlich, ein S- oder ein Z-Profil. Das gibt ihr eine ausserordentlich hohe radiale Nachgiebigkeit, so dass trotz der festen Führung des freien Endes der Achse 9 in der Büchse dieses freie Ende nicht nur relativ zur Mitte der die Büchse 55 aufnehmenden Bohrung im Stützring 50 auswandern kann, sondern darüber hinaus auch noch eine hiervor abweichende Winkellage einnehmen kann. Dies ist in Fig. 10 übertrieben gezeigt.

Wie in Fig. 6 angedeutet, kann die Neigung der Biegelinie der Achse 9 unter Belastung in der Nähe des Planetenradträgers 7 noch dadurch beeinflusst werden, dass man die Einspannung der Achse 9 beeinflusst, beispielsweise wie oben erwähnt durch Radialnuten 8, die in Umfangsrichtung des Planetenradträgers 7 zu beiden Seiten jeder Planetenradachse 9 in den Planetenradträger 7 eingefräst sind.

Ist selbst bei der erläuterten Käfigkonstruktion die Verformung der Planetenradachsen 9 noch zu gross, so kann schliesslich, wie dies in Fig. 6 angedeutet ist, das Sonnenrad 4 in der Mitte mit einer Bohrung 4a versehen werden, die es torsionsweicher werden lässt. Um abrupte Übergänge zu vermeiden, ist der Boden der Sackbohrung 4a, wie ebenfalls aus Fig. 6 ersichtlich, zweckmässig ausgerundet, wobei die Ausrundung im Bereich des Überganges des Sonnenrades 4 in die es tragende Welle 5 liegt.

In Fig. 11 ist eine Konstruktion für die Planetenradachsen dargestellt, die sich besonders gut für den Einbau in eine Konstruktion des Getriebes mit einer Stützscheibe und Stürzstegen eignet. Bei dieser Ausführungsform ist die Achse zweiteilig ausgeführt. Sie besteht aus einer Hohlachse 60 und einer diese durchsetzenden massiven Stützachse 61. Die Hohlachse ist in bereits erläuterter Weise mit ihrem in Fig. 11 rechten Ende in eine entsprechende Bohrung des Planetenradträgers 7 eingeschrumpft. Sie endet mit ihrem stützscheibenseitigen linken Ende, wie aus Fig. 11 ersichtlich, kurz vor der Stützscheibe. In der rechten Hälfte ihres die Planetenräder tragenden Bereiches und auch in dem in den Planetenradträger 7 eingeschrumpften Bereich ist die Bohrung der Hohlachse 60 zylindrisch. In dieser Bohrung erstreckt sich mit einem strammen Presssitz, der ggf. auch durch Einschrumpfung bewirkt sein kann, die Stützachse 61 und versteift in diesem Bereich dadurch die Hohlachse. In der linken Hälfte des die Planetenräder tragenden Bereiches ist die Bohrung der Hohlachse 60, wie aus der Zeichnung ersichtlich, – vorteilhaft konisch – vergrössert, so dass in diesem Bereich auch bei den im Betrieb auftretenden Verformungen die Hohlachse nicht an der Stützachse 61 anliegt. Das linke Ende der Stützachse 61 weist eine Verdickung 61a auf, deren Durchmesser

zweckmässig der leichten Montage wegen etwas grösser ist als der Durchmesser der die Hohlachse tragenden Bohrung des Planetenradträgers 7 und in einer entsprechenden, mit der letztgenannten Bohrung fluchtenden Bohrung in der Stützscheibe 50 mit einem leichten Presssitz sitzt.

Wird nun diese Achsenkonstruktion unter dem Einfluss des Betriebsdrehmoments des Getriebes verformt, so ist die Verformung in der in Fig. 11 rechten Hälfte der Hohlachse relativ gering, da sich diese hier wenigstens angenähert wie eine massive Achse verhält. Des weiteren ist diese Verformung deswegen gering, weil die Stützachse 61 ja auch an ihrem linken Ende eingespannt ist und damit auch von der Stützscheibe her den mittleren Bereich der Hohlachse 60 abstützt. Bei der auftretenden Belastung können die von den Planetenrädern in Umfangsrichtung auf die Hohlachse 60 ausgeübten Kräfte den stützscheibenseitigen Teil der Hohlachse jedoch verhältnismässig stark verformen. Auf diese Weise wird eine sehr günstige Form der Biegelinie der Hohlachse erzielt, obwohl die Stützachse fragezeichenförmig verformt wird. Die Krümmung der Biegelinie der Hohlachse bleibt nämlich im planetenradträgerseitigen Bereich der Achse verhältnismässig schwach, während sie im stützscheibenseitigen Bereich verhältnismässig stark wird. Eine derartige Biegung entspricht recht gut der Torsionsverformung einer Erzeugenden des Umfangs des Sonnenrades, also der Verformung, die eine Erzeugende einer Zahnflanke des Sonnenrades etwa in der Höhe des Teilkreises des Sonnenrades bei Torsion des Sonnenrades unter dem Betriebsdrehmoment erleidet.

Während die erstbeschriebene Konstruktion gemäss Fig. 1 in erster Linie bei kleinem Sonnenrad und relativ grossen Planetenrädern zweckmässig ist, ist die letztbeschriebene Konstruktion gemäss Fig. 6 in erster Linie für ein grosses Sonnenrad und relativ kleine Planetenräder geeignet.

Letzteres gilt auch für die in Fig. 12 gezeigte Konstruktion, die nur die von den Vorkonstruktionen wesentlich abweichenden Teile des Getriebes darstellt. In Fig. 12 erkennt man den Planetenradträger 7, der mittels in Fig. 12 nicht sichtbarer Stützarme die Stützscheibe 50 trägt. In entsprechenden Bohrungen des Planetenradträgers 7 und der Stützscheibe 5 sind die einfach zylindrisch ausgebildeten Planetenradwellen 9 mit Presssitz gehalten. Bei der hier gezeigten Konstruktion ist die axiale Erstreckung des hohl ausgebildeten Sonnenrades 70 grösser als bei den vorbeschriebenen Konstruktionen. Dementsprechend sind hier auch vier Planetenräder 71 bis 74 vorgesehen, die mittels Nadellagern auf der Planetenradwelle 9 umlaufen und durch schmale Distanzscheiben mit wesentlich geringerem Radius als die Planetenräder zu den oben erläuterten Zwecken auf Distanz gehalten werden. Die vier Planetenräder 71 bis 74 kämmen in üblicher Weise mit dem Sonnenrad 70. Wie aus Fig. 12 ersichtlich, ist das Sonnenrad als Hohlzylinder oder hohle Hülse ausgebildet, welche etwa in der Mitte eine Keilprofilverzahnung 77 trägt, die im Eingriff mit einer komplementären Keilprofilverzahnung 78 der in das Sonnenrad 70 hineinragenden Sonnenradwelle 79 steht. Die axiale Sicherung des Sonnenrades auf der Keilprofilwelle ist im Ausführungsbeispiel nicht gezeigt. Sie kann beispielsweise einerseits durch axiales Anlaufen des Sonnenrades 70 an den Planetenradträger 7 und andererseits durch einen in das planetenradträgerseitige Ende der Keilprofilverzahnung 77 eingesetzten Sprengring bewirkt sein.

Man erkennt, dass bei der gezeigten Konstruktion der Nullpunkt der Verdrehung des Sonnenrades etwa in der Mitte des Keilnutenprofiles 77 liegt, wo das Drehmoment in das Sonnenrad eingeleitet wird. Von diesem Mittelbereich aus wächst die Torsion nach beiden Seiten in der gleichen Richtung. Dementsprechend ist bei der gezeigten Konstruktion der vom Planetenradträger 7, den Stützarmen und dem Stützring 50 gebildete Käfig besonders steif gehalten, da die Planetenradachse 9 wegen ihrer grossen Länge verhältnismässig biegeschlaff ist. Die Biegelinie der Planetenradachse 9 in der Ebene des abgewickelten Zylinderschnittes durch die Mitte der Achse entspricht daher der ebenen Biegelinie eines beidseitig eingespannten Trägers mit im wesentlichen über seiner Länge konstant verteilter Last, wobei diese Biegelinie noch dadurch verzerrt ist, dass das Widerlager, das durch den Stützring 50 gebildet wird, aufgrund der unter den Torsionskräften auftretenden Verformung des erwähnten Käfigs in Richtung des Lastangriffes verschoben ist. Um diese Verschiebung auszugleichen, ist der Bereich, in welchem das Keilnutenprofil der Sonnenradwelle 79 das Drehmoment in das Sonnenrad 70 einleitet, gegenüber der Sonnenradmitte um den Betrag a versetzt, wie dies aus Fig. 12 ersichtlich ist.

Bei der Konstruktion nach Fig. 12 erkennt man ferner, dass die Stirnflächen der Verzahnungen der Planetenräder 71 bis 74 abgeschrägt sind. Das Hohlrad 80 besitzt ferner keine durchlaufende Verzahnung mehr. Vor dem Aufbringen der Verzahnung wurden in das Hohlrad vielmehr Umfangsnuten 81 eingestochen, welche etwas tiefer als die Verzahnung sind und Trapezprofil aufweisen. Die Nuten sind so breit gehalten, dass jeder der durch die Einstiche gebildeten Zahnkränze 82 des Hohlrades 80 eine geringere Axialerstreckung hat als das mit dem entsprechenden Zahnkranz kämmende Planetenrad. Dadurch werden die oben dargelegten Vorteile in bezug auf die bessere Anschmiegung der Planetenradzahnflanken an die Zahnflanken des Hohlrades erzielt. Eine derartige Verzahnung kann auch bei den beiden anderen gezeigten Ausführungen vorteilhaft sein.

## Patentansprüche

1. Umlaufstirnzahnradgetriebe mit einem Sonnenrad (4), in welches das Betriebsdrehmoment von einer Axialseite her eingeleitet wird, mit einem konzentrisch das Sonnenrad (4) umgebenden innenverzahnten Hohlrad (11), mit einem koaxial zum Sonnenrad (4) an der anderen Axialseite desselben angeordneten Planetenradträger (7), welcher gleichmässig über den Umfang verteilt Planetenradachsen (9) trägt, die am Planetenradträger (7) eingespannt sind und in den Bereich zwischen dem Sonnenrad (4) und dem Hohlrad (11) ragen, und mit Planetenrädern (1, 2, 3), die sowohl mit dem Hohlrad (11) als auch mit dem Sonnenrad (4) kämmen und von denen jeweils mehrere auf jeder Planetenradachse (9) sitzen, dadurch gekennzeichnet, dass die Biegesteifigkeit der Planetenradachsen (9) und/oder von deren Einspannung im Planetenradträger (7) einerseits und die Torsionssteifigkeit des Sonnenrades (4) und/oder dessen Verbindung mit der Sonnenradwelle (5) andererseits derart aufeinander abgestimmt sind, dass das Mass, um welches die Biegelinie (MM') der elastischen Durchbiegung der Planetenradachsen (9) in Richtung von deren Umlaufbewegung um die Getriebeachse unter dem Einfluss der vom Sonnenrad (4) und vom Hohlrad (11) auf die Planetenräder (1, 2, 3) übertragenen Kräfte von der Geraden abweicht, und das Mass, um welches eine auf eine Zahnflanke des Sonnenrades (4) in Höhe des Betriebswälzkreises desselben aufgetragene Axiallinie (EE') unter dem Einfluss der zwischen dem Sonnenrad (4) und den Planetenrädern (1, 2, 3) übertragenen Kräfte in Umfangsrichtung im wesentlichen durch Torsion verformt wird, einander jeweils wenigstens angenähert ausgleichen.

2. Getriebe nach Anspruch 1, dadurch gekennzeichnet, dass zwischen den auf derselben Planetenradachse (9) angeordneten Planetenrädern (1, 2, 3) gehärtete und geschliffene Distanzscheiben (40) angeordnet sind, deren Aussendurchmesser kleiner ist als der Fusskreisdurchmesser der Planetenräder.

3. Getriebe nach einem der Ansprüche 1 oder 2, dadurch gekennzeichnet, dass die Zahnflanken der Planetenräder (1, 2, 3) längsballig ausgeführt sind.

4. Getriebe nach einem der Ansprüche 1 bis 3, dadurch gekennzeichnet, dass das Hohlrad (11) für jede Gruppe von in gleicher Axialposition angeordneten Planetenrädern (1, 2, 3) einen gesonderten Zahnkranz aufweist, dessen tragende Zahnbreite 60 bis 90% der Zahnbreite der Zahnräder der entsprechenden Gruppe beträgt.

5. Getriebe nach Anspruch 4, dadurch gekennzeichnet, dass jeder Zahnkranz des Hohlrades (11) mittig mit den Planetenrädern der entsprechenden Gruppe kämmt und im Axialschnitt in bezug auf die Getriebeachse gesehen sich zum Zahnkopf hin verjüngende Zähne aufweist.

6. Getriebe nach einem der Ansprüche 3 bis 5, dadurch gekennzeichnet, dass die Zahnflankenflächen der von einer Achse getragenen Planetenräder (1, 2, 3) einander im Eingriffsbereich mit dem Sonnenrad (4) bei Normalbetriebsbedingungen zu einer stetig gekrümmten Fläche ergänzen, die der erwähnten verformten Axiallinie (EE') entspricht.

7. Getriebe nach einem der Ansprüche 1 bis 6, dadurch gekennzeichnet, dass die Abweichung der elastischen Biegelinie (MM') der Planetenradachsen (9) jeweils etwa gleich der halben Verformung der Axiallinie (EE') ist.

8. Getriebe nach einem der Ansprüche 1 bis 7, dadurch gekennzeichnet, dass die Planetenradachsen (9) am Planetenradträger nachgiebig eingespannt sind (Fig. 10).

9. Getriebe nach einem der Ansprüche 1 bis 8, dadurch gekennzeichnet, dass der in eine entsprechende Bohrung des Planetenradträgers (7) eingespannte — vorzugsweise eingeschrumpfte — Teil der Planetenradachsen (9) einen etwa 10% grösseren Durchmesser aufweist als der restliche Teil der Achsen.

10. Getriebe nach einem der Ansprüche 1 bis 9, dadurch gekennzeichnet, dass die planetenradträgerfernen Enden der Planetenradachsen (9) über Zwischenarme (51) am Planetenradträger (7) abgestützt sind.

11. Getriebe nach Anspruch 10, dadurch gekennzeichnet, dass die Planetenradachsen (9) in einem Stützring (50) abgestützt sind, der mit dem Planetenträger (7) durch die Zwischenarme bildende Axialstege (51) verbunden ist.

12. Getriebe nach Anspruch 11, dadurch gekennzeichnet, dass die Planetenradachsen (9) im Stützring (50) elastisch eingespannt sind.

13. Getriebe nach Anspruch 12, dadurch gekennzeichnet, dass die elastische Einspannung der Planetenradachsen (9) im Stützring (50) über radialelastische oder winkelelastische Mittel (55) bewirkt ist.

14. Getriebe nach einem der Ansprüche 10 bis 13, dadurch gekennzeichnet, dass der Planetenradträger (7), der Stützring (50) und die Axialstege (51) zusammen aus einem Stück bestehen.

15. Getriebe nach einem der Ansprüche 1 bis 14, dadurch gekennzeichnet, dass die Biegesteifigkeit der Planetenradachsen (9) vom Planetenradträger (7) zum freien Ende der Achsen hin abnimmt.

16. Getriebe nach einem der Ansprüche 1 bis 15, dadurch gekennzeichnet, dass das Drehmoment in das Sonnenrad (4) über ein unmittelbar an das Sonnenrad (4) anschliessendes, mit diesem in einem Stück ausgebildetes Wellenstück (5) eingeleitet wird, dessen polares Trägheitsmoment so bestimmt ist, dass die Neigung der einer Zylinderfläche um die Getriebeachse angehörenden Tangente an die genannte verformte Axiallinie (EE') am wellenstückseitigen Sonnenradende gleich der doppelten Neigung der einer Zylinderfläche um die Getriebeachse angehörenden Tangente an die genannte Biegelinie (MM') am freien Ende der Planetenradachsen ist.

17. Getriebe nach einem der Ansprüche 1 bis 16, dadurch gekennzeichnet, dass das Sonnenrad (4) hohl gebohrt ist.

18. Getriebe nach Anspruch 11, dadurch gekennzeichnet, dass die Planetenradachsen (9) derart mit einem Radialspiel im Stützring (50) gelagert sind, dass eine radial- und/oder winkelelastische Abstützung der Planetenradachsen (9) an der Stützscheibe (50) erst beim Auftreten eines Mindestdrehmoments erfolgt (Fig. 9).

19. Getriebe nach einem der Ansprüche 11 bis 17, dadurch gekennzeichnet, dass die Planetenradachsen (9) jeweils eine Hohlachse (60) und eine diese durchsetzende Stützachse (61) aufweisen, dass die Stützachse (61) im planetenradträgerseitigen Teil der Hohlachse (60) mit Presssitz sitzt, dass die Stützachse (61) im stützringseitigen Teil der Planetenradachse mit radialem Abstand in der Hohlachse (60) verläuft, dass die Stützachse (61) im Stützring (50) fest eingespannt ist, und dass die Hohlachse (60) nicht am Stützring (50) abgestützt ist.

20. Getriebe nach Anspruch 19, dadurch gekennzeichnet, dass die Stützachse (61) auch den im Planetenradträger (7) eingespannten Teil der Hohlachse (61) durchsetzt.

21. Getriebe nach einem der Ansprüche 10 bis 14, dadurch gekennzeichnet, dass das Sonnenrad als hohle Hülse ausgebildet ist, in deren mittlerem Bereich die in die Hülse hineinragende Sonnenradwelle mit der Hülse drehfest verbunden ist.

22. Getriebe nach Anspruch 21, dadurch gekennzeichnet, dass die Planetenradachsen sowohl im Planetenradträger als auch im Stützring mit Presssitz fest eingespannt sind.

23. Seilwinde, gekennzeichnet durch ein in einer Seiltrommel (16) angeordnetes Getriebe nach einem der Ansprüche 1 bis 22.

carrier side, that the supporting axle (61) extends in the hollow axle (60) with radial spacing in the part of the planet-pinion axle at the thrust-ring side, that the supporting axle (61) is firmly fixed in the thrust ring (50), and that the hollow axle (10) is not supported on the thrust ring (50).

20. A gear as claimed in Claim 19, characterised in that the supporting axle (61) also passes through the part of the hollow axle (61) fixed in the satellite carrier (7).

21. A gear as claimed in one of the Claims 10 to 14, characterised in that the sun wheel is constructed in the form of a hollow sleeve in the central region of which the sun-wheel shaft projecting into the sleeve is connected to the sleeve, being held against rotation in relation thereto.

22. A gear as claimed in Claim 21, characterised in that the planet-pinion axles are firmly fixed with a press fit both in the satellite carrier and in the thrust ring.

23. A cable winch, characterised by a gear as claimed in one of the Claims 1 to 22 disposed in a cable drum (16).

## Revendications

1. Engrenage planétaire à roues à dentures frontales, comprenant une roue soleil (4), dans laquelle le couple de rotation d'entraînement est appliqué à partir d'un côté axial, comprenant une roue creuse (11) à denture interne entourant concentriquement la roue soleil (4), comprenant un support (7) de roues planétaires, disposé coaxialement à la roue soleil (4) sur l'autre côté axial de cette dernière, et supportant des axes (9) de roues planétaires, répartis régulièrement sur sa périphérie, serrés dans le support (7) de roues planétaires et qui font saillie dans la région située entre la roue soleil (4) et la roue creuse (11), et comprenant des roues planétaires (1, 2, 3) qui engrènent aussi bien avec la roue creuse (11) qu'avec la roue soleil (4) et dont plusieurs sont montées respectivement sur chaque axe (9) de roue planétaire, caractérisé par le fait que la rigidité à la flexion des axes (9) de roues planétaires et/ou de leur serrage dans le support (7) de roues planétaires, d'une part, et la rigidité à la torsion de la roue soleil (4) et/ou de sa liaison avec l'arbre (5) de la roue soleil, d'autre part, sont déterminées l'une par rapport à l'autre de manière que la mesure selon laquelle la ligne de flexion (MM') représentant la flexion élastique des axes (9) de roues planétaires en direction de leur mouvement tournant autour de l'axe de l'engrenage dévie par rapport à la ligne droite sous l'influence des forces transmises par la roue soleil (4) et par la roue creuse (11) aux roues planétaires (1, 2, 3), et de manière que la mesure selon laquelle une ligne axiale (EE') passant sur un flanc de dent de la roue soleil (4) à la hauteur du cercle primitif de fonctionnement est déformée sensiblement par torsion en direction périphérique sous l'influence des forces transmises entre la roue soleil et les roues planétaires (1, 2, 3) se compensent à chaque fois mutuellement au moins approximativement.

2. Engrenage selon la revendication 1, caractérisé par le fait que des disques d'écartement (40) durcis et polis sont disposés entre les roues planétaires (1, 2, 3) montées sur le même axe (9), disques dont le diamètre externe est inférieur au diamètre du cercle de pied des roues planétaires.

3. Engrenage selon l'une des revendications 1 ou 2, caractérisé par le fait que les flancs des dents de roues planétaires (1, 2, 3) sont de forme bombée et allongée.

4. Engrenage selon l'une des revendications 1 à 3, caractérisé par le fait que la roue creuse (11) comprend, pour chaque groupe de roues planétaires (1, 2, 3) montées dans la même position axiale, une couronne dentée particulière dont la largeur portante des dents représente de 60 à 90% de la largeur des dents des roues dentées du groupe correspondant.

5. Engrenage selon la revendication 4, caractérisé par le fait que chaque couronne dentée de la roue creuse (11) engrène avec le milieu des roues planétaires du groupe correspondant et comprend, en coupe axiale par rapport à l'axe de l'engrenage, des dents allant en se réduisant en direction de leur tête.

6. Engrenage selon l'une des revendications 3 à 5, caractérisé par le fait que les surfaces des flancs des dents des roues planétaires (1, 2, 3) supportées par un axe se prolongent les unes les autres en formant, dans la région d'engrènement avec la roue soleil (4), quand les conditions de fonctionnement sont normales, une surface courbe continue correspondant à ladite ligne axiale (EE') déformée.

7. Engrenage selon l'une des revendications 1 à 6, caractérisé par le fait que la déviation de la ligne de flexion élastique (MM') des axes (9) des roues planétaires est à chaque fois sensiblement égale à la moitié de la déformation de la ligne axiale (EE').

8. Engrenage selon l'une des revendications 1 à 7, caractérisé par le fait que les axes (9) des roues planétaires sont serrés de façon flexible dans le support de roues planétaires (fig. 10).

9. Engrenage selon l'une des revendications 1 à 8, caractérisé par le fait que la partie des axes (9) des roues planétaires qui est serrée — de préférence frettée — dans un alésage correspondant du support (7) de roues planétaires présente un diamètre supérieur d'environ 10% à la partie restante de l'axe.

10. Engrenage selon l'une des revendications 1 à 9, caractérisé par le fait que les extrémités des axes (9) des roues planétaires qui sont éloignées du support de roues planétaires sont supportées par le support (7) de roues planétaires au moyen de bras intermédiaires (51).

11. Engrenage selon la revendication 10, caractérisé par le fait que les axes (9) de roues planétaires sont supportés dans un anneau de support (50) qui est relié au support (7) de roues planétaires par les branches axiales (51) formant les bras intermédiaires.

12. Engrenage selon la revendication 11, caractérisé par le fait que les axes (9) de roues planétaires sont serrés élastiquement dans l'anneau de support (50).

13. Engrenage selon la revendication 12, caractérisé par le fait que le serrage élastique des axes (9) de roues planétaires dans l'anneau de support (50) est réalisé par des moyens (55) élastiques en direction radiale ou élastiques en direction angulaire.

14. Engrenage selon l'une des revendications 10 à 13, caractérisé par le fait que le support (7) de roues planétaires, l'anneau de support (50) et les branches axiales (51) sont formés ensemble en constituant une pièce d'un seul tenant.

15. Engrenage selon l'une des revendications 1 à 14, caractérisé par le fait que la rigidité à la flexion des axes (9) de roues planétaires va en diminuant depuis le support (7) de roues planétaires jusqu'à l'extrémité libre des axes.

16. Engrenage selon l'une des revendications 1 à 15, caractérisé par le fait que le couple de rotation est appliqué à la roue soleil (4) par l'intermédiaire d'un tronçon d'arbre (5) se raccordant directement à la roue soleil (4) et constitué d'un seul tenant avec celle-ci, tronçon dont le moment d'inertie polaire est déterminé de manière que l'inclinaison de la tangente appartenant à une surface cylindrique située autour de l'axe de l'engrenage par rapport à ladite ligne axiale (EE') déformée à l'extrémité de la roue soleil située du côté du tronçon d'arbre soit égale au double de l'inclinaison de la tangente appartenant à une surface cylindrique située autour de l'axe de l'engrenage par rapport à ladite ligne de flexion (MM'), à l'extrémité libre des axes des roues planétaires.

17. Engrenage selon l'une des revendications 1 à 16, caractérisé par le fait que la roue soleil (4) est alésée pour être rendue creuse.

18. Engrenage selon la revendication 11, caractérisé par le fait que les axes (9) de roues planétaires sont montés avec un jeu radial dans l'anneau de support (50) de manière qu'un appui élastique radialement et/ou élastique angulairement des axes (9) de roues planétaires sur les disques de support (50) ne soit réalisé que lorsque apparaît un couple de rotation minimal (fig. 9).

19. Engrenage selon l'une des revendications 11 à 17, caractérisé par le fait que les axes (9) de roues planétaires présentent chacun un axe creux (60) et un axe d'appui (61) traversant ce dernier, que l'axe d'appui (61) est monté à ajustage serré dans la région de l'axe creux (60) située du côté du support de roues planétaires, que l'axe d'appui (61) passe dans la partie située du côté de l'anneau de support de l'axe de roues planétaires à une certaine distance radiale à l'intérieur de l'axe creux (60), que l'axe d'appui (61) est serré de façon ferme dans l'anneau de support (50) et que l'axe creux (60) ne s'appuie pas sur l'anneau de support (50).

20. Engrenage selon la revendication 19, caractérisé par le fait que l'axe d'appui (61) traverse également la partie de l'axe creux (60) qui est serrée dans le support (7) de roues planétaires.

21. Engrenage selon l'une des revendications 10 à 14, caractérisé par le fait que la roue soleil est constituée sous la forme d'un manchon creux, l'arbre de la roue soleil qui pénètre dans le manchon étant solidaire en rotation dudit manchon dans sa partie centrale.

22. Engrenage selon la revendication 21, caractérisé par le fait que les axes de roues planétaires sont montés à ajustage serré aussi bien dans le support de roues planétaires que dans l'anneau de support.

23. Treuil à câble, caractérisé par un engrenage monté dans un tambour à câble (16) selon l'une des revendications 1 à 22.

**Claims**

1. An epicyclic spur gear having a sun wheel (4) into which the operational torque is introduced from one axial side, having an internally toothed ring gear (11) which surrounds the sun wheel (4) concentrically, having a satellite carrier (7) which is disposed coaxially with the sun wheel (4) at the other axial side thereof and which carries planet pinion-axles (9) which are uniformly distributed over the circumference, are fixed to the satellite carrier (7) and project into the region between the sun wheel (4) and the ring gear (11) and having planet pinions (1, 2, 3) which mesh both with the ring gear (11) and with the sun wheel (4) and a plurality of which are mounted on each planet-pinion axle (9), characterised in that the bending resistance of the planet-pinion axles (9) and/or of their fixing in the satellite carrier (7) on the one hand and the torsional resistance of the sun wheel (4) and/or of its connection to the sun-wheel shaft (5) on the other hand are adapted to one another in such a manner that the extent by which the bending line (MM') of the resilient bending of the planet-pinion axles (9) in the direction of their rotational movement about the gear axis under the influence of the forces transmitted from the sun wheel (4) and from the ring gear (11) to the planet pinions (1, 2, 3) deviates from a straight line, and the extent by which an axial line (EE') traced on a tooth flank of the sun wheel (4) at the height of the operational pitch circle thereof is deformed in the circumferential direction substantially by torsion under the influence of the forces transmitted between the sun wheel (4) and the planet pinions (1, 2, 3), at least approximately compensate for one another.

2. A gear as claimed in Claim 1, characterised in that hardened and ground spacers (40), the outside diameter of which is smaller than the root circle diameter of the planet pinions, are disposed between the planet pinions (1, 2, 3) disposed on the same planet-pinion axle (9).

3. A gear as claimed in one of the Claims 1 or 2, characterised in that the tooth flanks of the planet pinions (1, 2, 3) are longitudinally crowned in construction.

4. A gear as claimed in one of the Claims 1 to 3, characterised in that the ring gear (11) comprises a separate toothed rim for each group of planet pinions (1, 2, 3) disposed in the same axial position, the bearing tooth width of which toothed rim amounts to 60 to 90% of the tooth width of the gear-wheels of the corresponding group.

5. A gear as claimed in Claim 4, characterised in that each toothed rim of the ring gear (11) meshes centrally with the planet pinions of the corresponding group and comprises teeth which become narrower towards the top of the tooth seen in axial section in relation to the gear axis.

6. A gear as claimed in one of the Claims 3 to 5, characterised in that the surfaces of the tooth flanks of the planet pinions (1, 2, 3) carried by one axle supplement one another in the region of engagement with the sun wheel (4) under normal operating conditions to form a continuously curved surface which corresponds to the said deformed axial line (EE').

7. A gear as claimed in one of the Claims 1 to 6, characterised in that the deviation of the resilient bending line (MM') of the planet-pinion axles (9) is substantially equal to half the deformation of the axial line (EE') in each case.

8. A gear as claimed in one of the Claims 1 to 7, characterised in that the planet-pinion axles (9) are flexibly fixed to the satellite carrier (Fig. 10).

9. A gear as claimed in one of the Claims 1 to 8, characterised in that the part of the planet-pinion axles (9) which is fixed—preferably shrunk in—in a corresponding bore of the satellite carrier (7) has a diameter which is larger by about 10% than the remaining part of the axles.

10. A gear as claimed in one of the Claims 1 to 9, characterised in that the ends of the planet-pinion axles (9) remote from the satellite carrier are supported on the satellite carrier (7) via intermediate arms (51).

11. A gear as claimed in Claim 10, characterised in that the planet-pinion axles (9) are supported in a thrust ring (50) which is connected to the satellite carrier (7) by axial webs (51) forming the intermediate arms.

12. A gear as claimed in Claim 11, characterised in that the planet-pinion axles (9) are resiliently fixed in the thrust ring (50).

13. A gear as claimed in Claim 12, characterised in that the resilient fixing of the planet-pinion axles (9) in the thrust ring (50) is effected via radially resilient or angularly resilient means (55).

14. A gear as claimed in one of the Claims 10 to 13, characterised in that the satellite carrier (7), the thrust ring (50) and the axial webs (51) together consist of one piece.

15. A gear claimed in one of the Claims 1 to 14, characterised in that the bending resistance of the planet-pinion axles (9) decreases from the satellite carrier (7) towards the free end of the axles.

16. A gear as claimed in one of the Claims 1 to 15, characterised in that the torque is introduced into the sun wheel (4) via a shaft portion (5) which follows directly on the sun wheel (4) and is made integral with this and the polar moment of inertia of which is determined so that the inclination of the tangent belonging to a cylinder surface about the gear axis to the said deformed axial line (EE') at the end of the sun wheel at the shaft-portion side is equal to double the inclination of the tangent belonging to a cylinder surface about the gear axis at the said bending line (MM') at the free end of the planet-pinion axles.

17. A gear as claimed in one of the Claims 1 to 16, characterised in that the sun wheel (4) is drilled hollow.

18. A gear as claimed in Claim 11, characterised in that the planet-pinion axles (9) are mounted with radial play in the thrust ring (50) in such a manner that a radially and/or angularly resilient supporting of the planet-pinion axles (9) on the supporting disc (50) is only effected on the appearance of a minimum torque (Fig. 9).

19. A gear as claimed in one of the Claims 11 to 17, characterised in that the planet-pinion axles (9) each comprise a hollow axle (60) and a supporting axle (61) passing through this, that the supporting axle (61) is mounted with a press fit in the part of the hollow axle (60) at the satellite-carrier side, that the supporting axle (61) extends in the hollow axle (60) with radial spacing in the part of the planet-pinion axle at the thrust-ring side, that the supporting axle (61) is firmly fixed in the thrust ring (50), and that the hollow axle (10) is not supported on the thrust ring (50).

20. A gear as claimed in Claim 19, characterised in that the supporting axle (61) also passes through the part of the hollow axle (61) fixed in the satellite carrier (7).

21. A gear as claimed in one of the Claims 10 to 14, characterised in that the sun wheel is constructed in the form of a hollow sleeve in the central region of which the sun-wheel shaft projecting into the sleeve is connected to the sleeve, being held against rotation in relation thereto.

22. A gear as claimed in Claim 21, characterised in that the planet-pinion axles are firmly fixed with a press fit both in the satellite carrier and in the thrust ring.

23. A cable winch, characterised by a gear as claimed in one of the Claims 1 to 22 disposed in a cable drum (16).

Fig.1

Fig.2

**Fig. 3**

E · P1
P2
P3
4
E'
5
6
+ M_d

**Fig. 4**

9 · 7
40 · M · E · 1
40 · 13 · 2
40 · 14 · E' · 3
M'
12

Fig. 6

Fig. 7

Fig. 5

Fig.8

7

51b

51

51a

IX

IX

7

51

9

51

57 55

50

56

Fig.10

Fig.9

Fig.11

FIG. 12

0 054 280